# FASCICULE DE BREVET EUROPEEN

(11) **EP 3 366 890 B1**
(45) Date de publication et mention de la délivrance du brevet: **11.12.2019**
(21) Numéro de dépôt: 18157779.2
(22) Date de dépôt: 21.02.2018
(51) Int. Cl.: F01D 25/18, F01D 25/20, F01M 11/00, F16N 29/00, F16N 29/02

(54) **SYSTÈME DE LUBRIFICATION INTÉGRÉ**
INTEGRIERTES SCHMIERSYSTEM
INTEGRATED LUBRICATION SYSTEM

(30) Priorité: 27.02.2017 BE 201705118
(43) Date de publication de la demande: 29.08.2018
(73) Titulaire: SAFRAN AERO BOOSTERS S.A., 4041 Herstal (BE)
(72) Inventeur: RAIMARCKERS, Nicolas, 4263 Tourinne (BE)
(74) Mandataire: Gevers Patents

(56) Documents cités:
- EP-A2- 2 014 877
- US-A- 5 754 055
- US-A1- 2006 054 406

## Description

### Domaine technique

Selon un premier aspect, l'invention se rapporte à un système de lubrification. L'invention propose également une turbomachine d'aéronef et un aéronef. Selon un second aspect, l'invention se rapporte à un système de maintenance d'une turbomachine d'aéronef.

### Etat de la technique

Une turbomachine d'aéronef dispose d'un système de lubrification qui permet une circulation de l'huile dans la turbomachine. Le système de lubrification permet d'assurer la lubrification des roulements dans la turbomachine. Le système de lubrification comprend en général un réservoir d'huile et un groupe de lubrification. Le groupe de lubrification comprend en général une ou plusieurs pompes et des tuyaux.

Le groupe de lubrification pompe l'huile dans le réservoir d'huile et la projette sur des roulements de la turbomachine avant de réacheminer l'huile vers le réservoir d'huile. Ainsi, le système de lubrification a également le rôle de collecter des petits débris issus des pièces mobiles ou issus de l'environnement extérieur afin d'éviter que ces débris n'endommagent la turbomachine. L'état du système de lubrification et de l'huile sont des paramètres essentiels lors du diagnostic d'une turbomachine. Lors d'opérations de maintenance, une analyse de l'huile permet de connaître l'état de santé du moteur ainsi que de donner une indication sur la durée de vie restante de l'huile.

De telles opérations de maintenance prennent du temps et immobilisent l'avion au sol. Il serait utile d'avoir un système de lubrification ayant une intelligence pour diagnostiquer des problèmes éventuels, tout en ayant une solution qui n'implique pas de grandes modifications de conception des turbomachines et de leur intégration dans un aéronef. Un système de lubrification selon le préambule de la revendication 1 est connu de US 2006/054406.

### Résumé de l'invention

Un des buts de la présente invention est de fournir un système de lubrification pour une turbomachine qui permet de réaliser un diagnostic plus complet du système de lubrification d'une turbomachine et qui est autonome. À cette fin, les inventeurs proposent, selon un premier aspect un système de lubrification pour une turbomachine d'un aéronef et comprenant :
- un réservoir d'huile ;
- un groupe de lubrification comprenant au moins une pompe et des tuyaux ;
- des capteurs pour mesurer des paramètres du système de lubrification ;
- une source d'énergie électrique pour alimenter lesdits capteurs, ladite source d'énergie électrique étant un générateur électrique pour convertir de l'énergie cinétique d'huile du système de lubrification en énergie électrique ;
- au moins une carte électronique pour contrôler ladite source d'énergie électrique et lesdits capteurs , programmée en outre pour analyser des signaux reçus desdits capteurs ;
- au moins une connexion électrique reliant l'au moins une carte électronique aux capteurs et à ladite source d'énergie électrique.

L'invention permet un diagnostic autonome du système de lubrification, de l'huile et de la turbomachine. L'invention permet de pouvoir équiper les turbomachine lors de leur fabrication sans nécessiter de raccordement au FADEC de l'aéronef pour fonctionner. L'invention permet de réduire les opérations de vérification de l'état de l'huile, de remplacement préventif de pièces ou de l'huile. L'invention a pour but de réduire l'immobilisation de l'aéronef aux seules opérations de maintenance indispensables tout en améliorant le diagnostic du système de lubrification et donc la sécurité de la turbomachine.

Le système de lubrification d'une turbomachine selon l'invention est autonome concernant l'alimentation électrique, la mesure des données et l'analyse ce celles-ci pour établir un diagnostic.

Le système de lubrification de l'invention permet de remplacer avantageusement certaines mesures déjà réalisées par l'aéronef au travers du FADEC car l'invention permet de réaliser certaines mesures localement.

Le système de lubrification de l'invention permet de délester le FADEC de certains calculs et ou de réaliser ces calculs localement de manière plus précise par exemple. Des calculs plus précis ou plus détaillés sont par exemple des calculs réalisés plus souvent, avec un taux de rafraichissement plus élevé ou utilisant des algorithmes de calculs prenant en compte plus de paramètres.

L'invention permet au système de lubrification de réaliser un diagnostic en conditions de fonctionnement, le système de lubrification permet de détecter toute anomalie et permet de prévoir des opérations de maintenance lorsqu'elles sont nécessaires plutôt que de recourir à des opérations de maintenance préventives.

Les tuyaux sont aussi des canalisations ou des connexions fluidiques. De préférence, le système de lubrification comprend aussi un échangeur de chaleur, par exemple air-liquide (eau ou huile par exemple pour le liquide) ou liquide-liquide (eau-huile par exemple). Cela permet de refroidir l'huile du système de lubrification et cette dernière permet de refroidir différents éléments moteur. De préférence, ledit échangeur est situé dans une veine externe de la turbomachine à laquelle le système de lubrification est rattaché.

De préférence, la carte électronique à partir des signaux reçus par les capteurs peut déclencher ou générer un signal d'alarme si par exemple trop de particules sont détectées dans le circuit d'huile, ou quand une température trop élevée est mesurée ou quand une pression trop élevée (ou trop basse) est mesurée. Cette carte électronique est par exemple un processeur ou unité centrale de traitement (cpu en anglais).

Un système de type FADEC, comme cela est connu d'un homme du métier.

Préférentiellement, au moins une carte électronique est indépendante d'un système d'interface entre une cabine de pilotage et une turbomachine d'aéronef pour le fonctionnement de la turbomachine.

L'avantage qu'au moins une carte électronique est indépendante d'un système d'interface entre une cabine de pilotage et une turbomachine est que cette carte électronique peut effectuer une acquisition de données, l'analyse de ces données ainsi que de communiquer des informations. De préférence, un système d'interface entre une cabine de pilotage et une turbomachine est un FADEC.

Préférentiellement, la source d'énergie électrique est indépendante d'un système d'interface entre une cabine de pilotage et une turbomachine d'aéronef pour le fonctionnement de la turbomachine.

L'avantage d'une source d'énergie électrique indépendante d'un FADEC est de doter une turbomachine d'une source d'énergie locale permettant d'alimenter une carte électronique, des capteurs et des systèmes de transmission et de communication. L'avantage d'une telle source d'énergie est de disposer d'un système de lubrification intégré et intelligent permettant de transmettre des informations relatives à son état et de fournir des données relatives aux opérations de contrôle et de maintenance sans passer par la cabine de l'aéronef ni même par l'ouverture du carter de la turbomachine.

Le générateur électrique de l'invention est un générateur d'énergie électrique. Un générateur d'énergie électrique est par exemple un générateur de courant continu ou de courant alternatif. L'invention permet la génération d'énergie électrique indépendamment de la génération d'énergie électrique primaire destinée à l'alimentation électrique d'un aéronef. L'invention permet grâce à l'énergie électrique générée, de collecter des données par des systèmes de capteurs afin de connaitre l'état du système de lubrification dans ses différentes parties. L'invention permet l'analyse des données collectées afin de connaitre l'état de santé de l'huile, du système de lubrification et de la turbomachine.

De préférence, le générateur électrique comprend un élément de conversion pour entrer en contact avec de l'huile du système de lubrification, et entraîner le génération d'électricité à partir d'un mouvement d'huile.

La pompe fournit une énergie à l'huile pour sa circulation dans le système de lubrification. Le générateur électrique de l'invention permet de récupérer une partie de cette énergie sans pour autant entraîner de perte de charge de l'huile au niveau des tuyaux.

Préférentiellement, ledit générateur électrique est situé dans le réservoir d'huile (9).

Le générateur électrique permet la récupération de l'énergie cinétique de l'huile disponible au niveau d'un réservoir d'huile. Le générateur électrique permet la génération d'énergie électrique au niveau d'un réservoir d'huile. Lors de son retour dans l'enceinte du réservoir d'huile, l'énergie de l'huile est en général perdue. L'avantage de positionner le générateur électrique au niveau de l'arrivée de l'huile dans l'enceinte du réservoir d'huile est de pouvoir récupérer l'énergie de l'huile. L'invention permet de fournir un générateur d'énergie auxiliaire et local disposant d'une meilleure intégration car il ne nécessite pas de prise sur le rotor de la turbomachine ou sur le boitier d'accessoire. L'invention utilise l'énergie cinétique de l'huile qui est habituellement perdue. Au final, la solution proposée par l'invention est plus favorable d'un point de vue énergétique.

Par exemple, un des capteurs est un capteur de pression pour mesurer une pression d'huile dans un tuyau.

Par exemple, un des capteurs est un capteur de température pour mesurer une température d'huile dans le système de lubrification.

Par exemple, au moins un desdits capteurs est apte à transmettre une information relative à des propriétés physico-chimiques d'huile du système de lubrification à la carte électronique via la connexion électrique.

Préférentiellement, le système de lubrification comprend des moyens de transmission de données et des moyens de communication de données couplés entre eux, et en ce que lesdits moyens de transmission sont connectés à la carte électronique pour transmettre aux moyens de communication, des données de la carte électronique.

Par exemple, les moyens de couplage utilisent des moyens électriques ou électromagnétiques.

Préférentiellement, le système de lubrification comprend des moyens de stockage de données, les moyens de transmission étant connectés aux moyens de stockage de données pour stocker des données de la carte électronique.

Le système de lubrification de l'invention permet par exemple d'enregistrer des paramètres, de faire des statistiques et des courbes de tendances pour la maintenance. L'avantage de l'invention est de pouvoir transmettre des données collectées et ou des données analysées vers des systèmes de communication ou de stockage des données. Par exemple, la carte électronique permet de traiter des données issues du ou des capteur(s) de sorte à fournir une information de maintenance utile et/ou une ou plusieurs alertes.

Préférentiellement, le système de lubrification comprend une connexion électrique connectée aux moyens de transmission pour transférer et recevoir des informations en dehors du système de lubrification.

Préférentiellement, les moyens de communication permettent une communication sans fil.

Préférentiellement, le système de lubrification comprend des moyens de stockage d'électricité pour alimenter au moins une carte électronique.

Les inventeurs proposent également une turbomachine comprenant un système de lubrification selon la revendication 1.

Les inventeurs proposent également un système de maintenance d'une turbomachine comprenant :
- une turbomachine selon la revendication 12;
- un appareil mobile apte à communiquer avec les moyens de communication pour informer un opérateur situé en-dehors d'un aéronef d'un état dudit système de lubrification.

Les inventeurs proposent également, un aéronef comprenant au moins une turbomachine selon la revendication 12.

Les inventeurs proposent également, un système de maintenance d'une turbomachine d'aéronef selon la revendication 14 dont les moyens de communication, couplés aux moyens de transmission permettent de communiquer à l'extérieur de l'aéronef une information représentative d'un état dudit système de lubrification et en ce que le système de maintenance comprend un appareil mobile apte à communiquer avec lesdits moyens de communication à un opérateur situé au sol en-dehors de l'aéronef.

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
- la Fig.1 montre un aéronef muni de quatre turbomachines et un opérateur ;
- la Fig.2 montre un diagramme du système de lubrification comprenant des connexions électriques entre des capteurs et un système électronique ainsi que des connections fluidiques et mécaniques avec une turbomachine ;
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

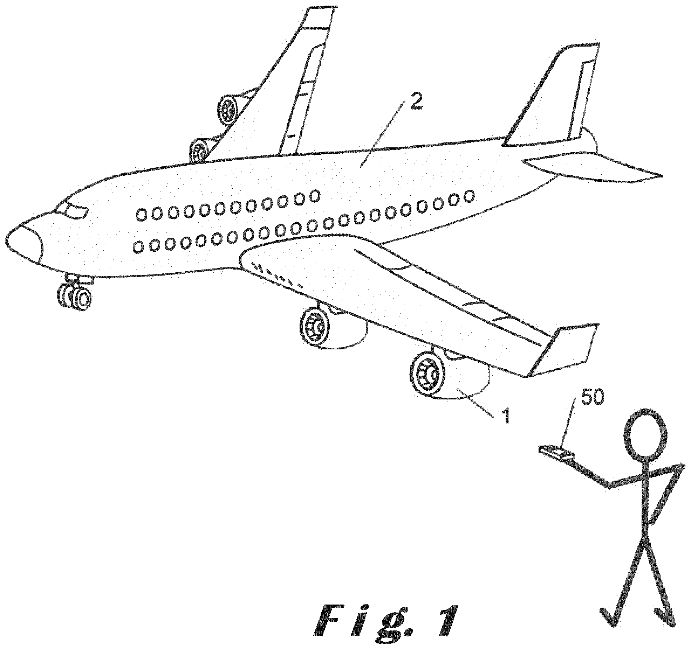

La figure 1 illustre un avion, exemple d'un aéronef 2, ayant quatre turbomachines 1. Un aéronef 2 comprend généralement un nombre paire de turbomachines 1, par exemple deux ou quatre. Le terme turbomachine 1 est connu d'un homme du métier. Il peut par exemple s'agir d'un turboréacteur ou d'un turbopropulseur. Une turbomachine 1 comprend généralement différentes parties telles que par exemple une soufflante, un ou plusieurs compresseurs, un circuit de refroidissement, une chambre de combustion, une ou plusieurs turbines.

La figure 1 illustre également un opérateur muni d'un appareil mobile 50 qui lui permet de communiquer avec un système de l'aéronef 2 comprenant des moyens de communications 15. L'opérateur situé à proximité de l'aéronef 2 peut par exemple établir une connexion avec ou sans fil de son appareil mobile 50 avec le système de l'aéronef muni de moyen de communication 15. L'opérateur peut ainsi collecter des données d'un système de lubrification 10 d'une turbomachine 1. Les données concernant la turbomachine 1 peuvent être un diagnostic de l'état du système de lubrification 10. Les données collectées par l'opérateur peuvent être des données communiquées par un des capteurs 4 à la carte électronique 6 concernant une mesure de pression, de température, de l'état de l'huile ou encore indiquant la présence de débris dans l'huile.

Un opérateur utilisant un appareil mobile 50 sans fil peut communiquer avec les systèmes de communication 15 de l'aéronef 2 dans un rayon allant de préférence jusqu'à 100 m. De préférence, les moyens de communication 15 et l'appareil mobile 50 comprennent des émetteurs et récepteurs de signaux électriques ou électromagnétiques leur permettant une connexion entre eux avec ou sans fil.

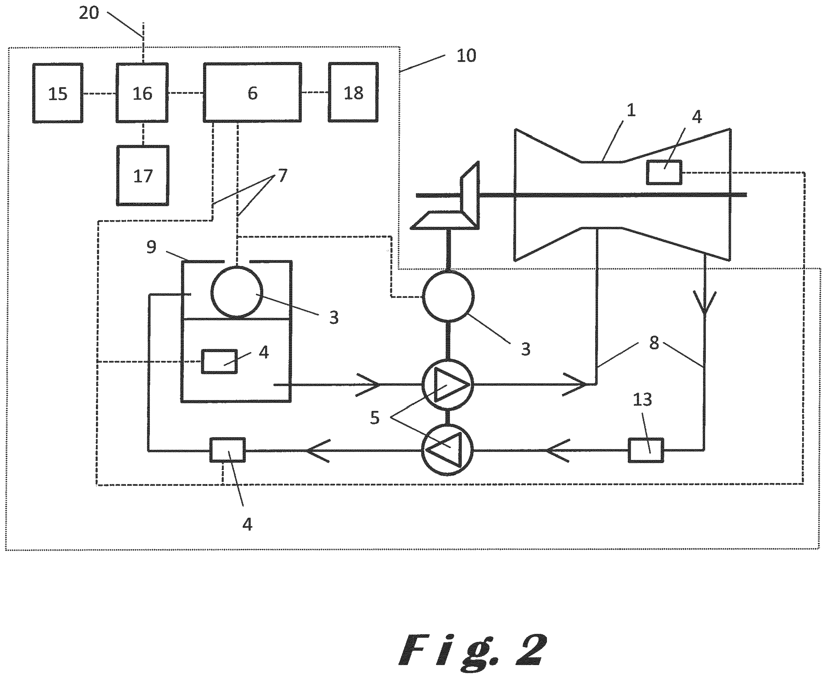

La figure 2 montre un schéma d'un exemple de mode de réalisation du système de lubrification 10 et des connexions fluidiques 8 et mécaniques qu'il partage avec une turbomachine 1 d'aéronef 2.

Le système de lubrification 10 comprend des pompes 5 qui permettent de pomper l'huile et qui sont actionnées par exemple par le boitier d'accessoire, lui-même actionné par l'arbre du compresseur de la turbomachine 1.

L'huile est pompée du réservoir d'huile 2 à la turbomachine 1 par une pompe 3 permet la lubrification des éléments tournants de la turbomachine 1. L'huile est projetée dans la turbomachine 1 sur les parties en mouvements nécessitant une telle lubrification. L'huile qui est projetée en excès ou qui s'écoule sur ces parties en mouvement est ensuite réacheminée vers le réservoir d'huile 2 par une pompe 3. L'huile peut alors contenir de l'air ainsi que des débris ou des polluants issus des pièces en mouvements, de la combustion ou encore de l'environnement extérieur.

Des filtres 13 peuvent être positionnés dans les canalisations 8 qui vont du réservoir d'huile 2 à la turbomachine 1 ainsi que dans les canalisations 8 qui vont de la turbomachine 1 au réservoir d'huile 2. Les filtres 13 permettent de bloquer d'éventuelles particules présentent dans l'huile en provenance de la turbomachine 1 ou en provenance du réservoir d'huile 2. Cela n'est pas illustré à la figure 2 mais le système de lubrification 10 comprend de préférence un échangeur de chaleur, par exemple air-liquide (huile) qui permet de refroidir l'huile qui elle-même permet de refroidir certains éléments moteur.

Dans un mode de réalisation préféré de l'invention, le système de lubrification 10 comprend au moins un capteur 4 au niveau de la turbomachine 1 apte à transmettre des signaux relatifs à une température, une pression, une viscosité d'huile à la carte électronique 6 via les connexions électriques 5. Un capteur 4 du système de lubrification 10 dans la turbomachine 1 permet par exemple de détecter des anomalies de fonctionnement de la turbomachine 1 qui peuvent être détectées par le système de lubrification 10.

Dans un mode de réalisation préféré de l'invention, le système de lubrification 10 comprend un ou plusieurs capteurs 4 qui permettent d'envoyer à la carte électronique 6, des signaux relatifs à un niveau de remplissage, à une température, à un coefficient d'absorption ou encore à une viscosité. Le ou les capteurs 4 présents au niveau du réservoir d'huile 2 génèrent des signaux qui sont transmis à la carte électronique 6. Ces signaux sont alors analysé par la carte électronique 6 et sont comparés à des données stockées dans le système de stockage de données 17. Ces données peuvent être des données de référence fournies par le fabricant du système de lubrification 10 par exemple ou bien des données enregistrées au préalable pendant le fonctionnement de la turbomachine 1.

Dans un mode de réalisation préféré de l'invention, un ou plusieurs capteurs 4 sont positionnés le long des tuyaux 8 afin de pouvoir transmettre des signaux à la carte électronique 6 relatif à une pression. La disposition de capteurs 4 tout au long du système de lubrification 10 permet grâce à une analyse par la carte électronique 6 des signaux envoyés par chacun des capteurs 4, de connaître et d'identifier l'origine d'une panne dans le système de lubrification 10. Ainsi la disposition de capteurs 4 dans le système de lubrification 10 permet de pouvoir différencier une panne de capteur 4, d'une fuite. En effet, un capteur 4 défectueux peut envoyer à la carte électronique 6 un signal de pression qui n'est pas représentatif de la pression réelle dans une partie du système de lubrification 10. La présence de plusieurs capteurs 4 disposés le long du système de lubrification 10 permet grâce à la combinaison par la carte électronique 6 des signaux issus des autres capteurs 4, de détecter un capteur 4 défectueux et de permettre au système de lubrification 10 de fonctionner de façon normale tout en émettant par exemple une consigne pour la prochaine maintenance.

Dans un mode de réalisation préféré, le système de lubrification 10 à la capacité d'identifier l'origine de pannes. Dans l'état de l'art actuel, il n'est pas possible de distinguer une panne d'un capteur 4 de celle de l'élément qu'il est censé mesurer et donc d'en tirer une réaction adaptée, au niveau de la maintenance ou allant même jusqu'à l'arrêt forcé de la turbomachine 1. Le système de lubrification 10 prévoit plus de capteurs 4 et la carte électronique 6 prévoit une analyse intelligente des signaux issus des capteurs 4, c'est-à-dire permettant de croiser les informations reçues par les capteurs 4 afin de détecter toute anomalie au niveau d'un capteur 4 ou d'une élément du système de lubrification 10.

Par ailleurs, un système basé sur un moyen de stockage d'énergie peut être mis en place pour alimenter le système de lubrification 10 pendant les phases d'arrêt, de maintenance ou de taxi par exemple. Un système de secours basé sur la mémorisation du dernier signal peut également être mis en place.

Dans un mode de réalisation préféré de l'invention, le système de lubrification 10 permet une gestion des information récoltées afin de pouvoir les partager entre différentes parties du système de lubrification 10. Par exemple le système 10 permet de croiser des informations issus d'un capteur 4 situé près d'une pompe 5 avec les informations des capteurs 4 placés dans le réservoir d'huile 9. Les mêmes données issues du capteur 4 situé près d'une pompe 5 pouvant également être utilisé avec des données issu d'un capteur 4 situé dans la turbomachine 1 par exemple. Une information issue d'un capteur 4 est de préférence utilisée pour redonder d'autres informations issues d'autres capteurs 4 pour fiabilisé le système 10. Une information descendante du FADEC pour être analysée par la carte électronique 6 peut également être envisagée. Une information descendante du FADEC parvient aux moyens de transmission 16 par une connexion électrique 20.

Les inventeurs proposent également une procédure de maintenance au sol d'une turbomachine 1 grâce aux moyens de communication 15, un opérateur va pouvoir lire, au sol, une information relative à une information sur l'état du système de lubrification 10 mesuré par exemple par l'un des capteurs 4 et analysé par la carte électronique 6.

Les inventeurs proposent également une procédure de maintenance au sol d'un aéronef 2 grâce aux moyens de communication 15, un opérateur va pouvoir lire, au sol, une information relative à une information sur l'état du système de lubrification 10 d'une turbomachine mesuré par exemple par l'un des capteurs 4 et analysé par la carte électronique 6.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Système de lubrification 10 pour une turbomachine 1 d'un aéronef 2 et comprenant :
- un réservoir d'huile 9 ;
- un groupe de lubrification comprenant au moins une pompe 5 et des tuyaux 8 ;
- des capteurs 4 pour mesurer des paramètres du système de lubrification 10 ;
- une source d'énergie électrique 3 pour alimenter lesdits capteurs 4, ladite source d'énergie électrique (3) étant un générateur électrique pour convertir de l'énergie cinétique d'huile du système de lubrification (10) en énergie électrique ;
- au moins une carte électronique 6 pour contrôler ladite source d'énergie électrique 3 et lesdits capteurs 4, programmée en outre pour analyser des signaux reçus desdits capteurs 4 ;
- au moins une connexion électrique 7 reliant l'au moins une carte électronique 6 aux capteurs 4 et à ladite source d'énergie électrique 3.

## Revendications

1. Système de lubrification (10) pour une turbomachine (1) d'un aéronef (2) et comprenant :
- un réservoir d'huile (9) ;
- un groupe de lubrification comprenant au moins une pompe (5) et des tuyaux (8) ;
- des capteurs (4) pour mesurer des paramètres du système de lubrification (10);
- une source d'énergie électrique (3) pour alimenter lesdits capteurs (4),
- au moins une carte électronique (6) pour contrôler ladite source d'énergie électrique (3) et lesdits capteurs (4), programmée pour analyser des signaux reçus desdits capteurs (4) ;
- au moins une connexion électrique (7) reliant l'au moins une carte électronique (6) aux capteurs (4) et à ladite source d'énergie électrique (3), **caractérisé en ce que**
ladite source d'énergie électrique (3) est un générateur électrique pour convertir l'énergie cinétique d'huile du système de lubrification (10) en énergie électrique.

2. Système de lubrification (10) selon la revendication précédente **caractérisé en ce que** l'au moins une carte électronique (6) est indépendante d'un système d'interface entre une cabine de pilotage et une turbomachine (1) d'aéronef (2) pour le fonctionnement de ladite turbomachine (1).

3. Système de lubrification (10) selon l'une quelconque des revendications précédentes **caractérisé en ce que** ladite source d'énergie électrique (3) est indépendante d'un système d'interface entre une cabine de pilotage et une turbomachine (1) d'aéronef (2) pour le fonctionnement de ladite turbomachine (1).

4. Système de lubrification (10) selon la revendication 1 **caractérisé en ce que** ledit générateur électrique est situé dans le réservoir d'huile (9).

5. Système de lubrification (10) selon l'une quelconque des revendications précédentes **caractérisé en ce que** un desdits capteurs (4) est un capteur de pression pour mesurer une pression d'huile dans un tuyau (8).

6. Système de lubrification (10) selon l'une quelconque des revendications précédentes **caractérisé en ce que** un desdits capteurs (4) est un capteur de température pour mesurer une température d'huile dans le système de lubrification (10).

7. Système de lubrification (10) selon l'une quelconque des revendications précédentes **caractérisé en ce que** un desdits capteurs (4) est apte à transmettre une information relative à des propriétés physico-chimiques d'huile du système de lubrification (10) à ladite carte électronique (6) via ladite connexion électrique (7).

8. Système de lubrification (10) selon l'une quelconque des revendications précédentes **caractérisé en ce qu'**il comprend en outre des moyens de transmission (16) de données et des moyens de communication (15) de données couplés entre eux, et **en ce que** lesdits moyens de transmission (16) sont connectés à ladite carte électronique (6) pour transmettre auxdits moyens de communication (15), des données de ladite carte électronique (6).

9. Système de lubrification (10) selon la revendication précédente **caractérisé en ce qu'**il comprend en outre des moyens de stockage de données (17), et **en ce que** lesdits moyen de transmission (16) sont connectés auxdits moyens de stockage de données (17) pour stocker des données de ladite carte électronique (6).

10. Système de lubrification (10) selon l'une quelconque des deux revendications précédentes **caractérisé en ce qu'**il comprend en outre une connexion électrique (20) connectée auxdits moyens de transmission (16) pour transférer et recevoir des informations en dehors du système de lubrification (10).

11. Système de lubrification (10) selon l'une quelconque des trois revendications précédentes **caractérisé en ce que** lesdits moyens de communication (15) permettent une communication sans fil.

12. Turbomachine (1) comprenant un système de lubrification (10) selon l'une quelconque des revendications précédentes.

13. Aéronef (2) comprenant au moins une turbomachine (1) selon la revendication précédente.

14. Système de maintenance d'une turbomachine (1) comprenant :
- une turbomachine selon la revendication 12 quand elle dépend de l'une quelconque des revendications 8 à 11 ;
- un appareil mobile (50) apte à communiquer avec lesdits moyens de communication (15) pour informer un opérateur situé en-dehors d'un aéronef (2) d'un état dudit système de lubrification (10).

15. Système de maintenance d'une turbomachine (1) d'aéronef selon la revendication précédente **caractérisé en ce que** lesdits moyens de communication (15), couplés auxdits moyens de transmission (16) permettent de communiquer à l'extérieur de l'aéronef (2) une information représentative d'un état dudit système de lubrification (10) et **en ce que** ledit système de maintenance comprend un appareil mobile (50) apte à communiquer avec lesdits moyens de communication (15) à un opérateur situé au sol en-dehors de l'aéronef (2).

## Patentansprüche

1. Schmiersystem (10) für eine Turbomaschine (1) eines Luftfahrzeugs (2), und das Folgendes umfasst:
- einen Ölbehälter (9);
- ein Schmieraggregat, das mindestens eine Pumpe (5) und Rohrleitungen (8) umfasst;
- Sensoren (4) zum Messen der Parameter des Schmiersystems (10);
- eine Quelle elektrischer Energie (3) zum Versorgen der Sensoren (4),
- mindestens eine Elektronikkarte (6) zum Steuern der Quelle elektrischer Energie (3) und der Sensoren (4), die programmiert ist, um Signale, die von den Sensoren (4) empfangen werden, zu analysieren;
- mindestens eine elektrische Verbindung (7), die die mindestens eine Elektronikkarte (6) mit den Sensoren (4) und der Quelle elektrischer Energie (3) verbindet, **dadurch gekennzeichnet,**
**dass** die Quelle elektrischer Energie (3) ein elektrischer Generator zum Umwandeln kinetischer Energie von Öl des Schmiersystems (10) in elektrische Energie ist.

2. Schmiersystem (10) nach dem vorstehenden Anspruch, **dadurch gekennzeichnet, dass** die mindestens eine Elektronikkarte (6) von einem Schnittstellensystem zwischen einem Cockpit und einer Turbomaschine (1) eines Luftfahrzeugs (2) für den Betrieb der Turbomaschine (1) unabhängig ist.

3. Schmiersystem (10) nach einem der vorstehenden Ansprüche, **dadurch gekennzeichnet, dass** die Quelle elektrischer Energie (3) von einem Schnittstellensystem zwischen einem Cockpit und einer Turbomaschine (1) eines Luftfahrzeugs (2) für den Betrieb der Turbomaschine (1) unabhängig ist.

4. Schmiersystem (10) nach Anspruch 1, **dadurch gekennzeichnet, dass** der elektrische Generator in dem Ölbehälter (9) liegt.

5. Schmiersystem (10) nach einem der vorstehenden Ansprüche, **dadurch gekennzeichnet, dass** einer der Sensoren (4) ein Drucksensor zum Messen eines Öldrucks in einer Rohrleitung (8) ist.

6. Schmiersystem (10) nach einem der vorstehenden Ansprüche, **dadurch gekennzeichnet, dass** einer der Sensoren (4) ein Temperatursensor zum Messen einer Öltemperatur in dem Schmiersystem (10) ist.

7. Schmiersystem (10) nach einem der vorstehenden Ansprüche, **dadurch gekennzeichnet, dass** einer der Sensoren (4) geeignet ist, eine Information in Zusammenhang mit den physikalisch-chemischen Eigenschaften von Öl des Schmiersystems (10) zu der Elektronikkarte (6) über die elektrische Verbindung (7) zu übertragen.

8. Schmiersystem (10) nach einem der vorstehenden Ansprüche, **dadurch gekennzeichnet, dass** es weiter Mittel zum Übertragen (16) von Daten und Mittel zur Kommunikation (15) von Daten, die miteinander gekoppelt sind, umfasst, und dass die Übertragungsmittel (16) mit der Elektronikkarte (6) verbunden sind, um den Kommunikationsmitteln (15) Daten der Elektronikkarte (6) zu übertragen.

9. Schmiersystem (10) nach dem vorstehenden Anspruch, **dadurch gekennzeichnet, dass** es weiter Datenspeichermittel (17) umfasst, und dadurch, dass die Übertragungsmittel (16) mit den Datenspeichermitteln (17) verbunden sind, um Daten der Elektronikkarte (6) zu speichern.

10. Schmiersystem (10) nach einem der zwei vorstehenden Ansprüche, **dadurch gekennzeichnet, dass** es weiter eine elektrische Verbindung (20) umfasst, die mit den Übertragungsmitteln (16) verbunden ist, um Informationen außerhalb des Schmiersystems (10) zu übertragen und zu empfangen.

11. Schmiersystem (10) nach einem der drei vorstehenden Ansprüche, **dadurch gekennzeichnet, dass** die Kommunikationsmittel (15) eine drahtlose Kommunikation erlauben.

12. Turbomaschine (1), die ein Schmiersystem (10) nach einem der vorstehenden Ansprüche umfasst.

13. Luftfahrzeug (2), das mindestens eine Turbomaschine (1) nach dem vorstehenden Anspruch umfasst.

14. Wartungssystem einer Turbomaschine (1), das Folgendes umfasst:
- eine Turbomaschine nach Anspruch 12, wenn sie von einem der Ansprüche 8 bis 11 abhängt;
- ein Mobilgerät (50), das geeignet ist, mit den Kommunikationsmitteln (15) zu kommunizieren, um einen Bediener, der sich außerhalb eines Luftfahrzeugs (2) befindet, über einen Zustand des Schmiersystems (10) zu informieren.

15. Wartungssystem einer Turbomaschine (1) eines Luftfahrzeugs nach dem vorstehenden Anspruch, **dadurch gekennzeichnet, dass** die Kommunikationsmittel (15), die mit den Übertragungsmitteln (16) gekoppelt sind, es erlauben, außerhalb des Luftfahrzeugs (2) eine Information zu kommunizieren, die für einen Zustand des Schmiersystems (10) repräsentativ ist, und dadurch, dass das Wartungssystem ein Mobilgerät (50) umfasst, das geeignet ist, mit den Kommunikationsmitteln (15) zu einem Bediener, der sich außerhalb des Luftfahrzeugs (2) auf dem Boden befindet, zu kommunizieren.

## Claims

1. Lubrication system (10) for a turbine engine (1) of an aircraft (2) and comprising:
- an oil tank (9);
- a lubrication unit comprising at least one pump (5) and pipes (8);
- sensors (4) for measuring parameters of the lubrication system (10);
- a source of electrical energy (3) for supplying said sensors (4),
- at least one electronic card (6) for controlling said source of electrical energy (3) and said sensors (4), programmed to analyse signals received from said sensors (4);
- at least one electrical connection (7) connecting the at least one electronic card (6) to the sensors (4) and to said source of electrical energy (3) **characterised in that**
said source of electrical energy (3) is an electric generator for converting the kinetic energy of oil of the lubrication system (10) into electrical energy.

2. Lubrication system (10) according to the preceding claim, **characterised in that** the at least one electronic card (6) is independent of an interface system between a cockpit and a turbine engine (1) of an aircraft (2) for the operation of said turbine engine (1).

3. Lubrication system (10) according to any one of the preceding claims, **characterised in that** said source of electrical energy (3) is independent of an interface system between a cockpit and a turbine engine (1) of an aircraft (2) for the operation of said turbine engine (1).

4. Lubrication system (10) according to claim 1, **characterised in that** said electric generator is located in the oil tank (9).

5. Lubrication system (10) according to any one of the preceding claims, **characterised in that** one of said sensors (4) is a pressure sensor for measuring an oil pressure in a pipe (8).

6. Lubrication system (10) according to any one of the preceding claims, **characterised in that** one of said sensors (4) is a temperature sensor for measuring an oil temperature in the lubrication system (10).

7. Lubrication system (10) according to any one of the preceding claims, **characterised in that** one of said sensors (4) is able to transmit information relating to physico-chemical properties of the oil of the lubrication system (10) to said electronic card (6) via said electrical connection (7).

8. Lubrication system (10) according to any one of the preceding claims, **characterised in that** it further comprises means of transmitting (16) data and means of communicating (15) data coupled together, and **in that** said transmission means (16) are connected to said electronic card (6) to transmit to said communication means (15), data from said electronic card (6).

9. Lubrication system (10) according to the preceding claim, **characterised in that** it further comprises data storage means (17), and **in that** said transmission means (16) are connected to said data storage means (17) for storing data from said electronic card (6).

10. Lubrication system (10) according to any one of the two preceding claims, **characterised in that** it further comprises an electrical connection (20) connected to said transmission means (16) for transferring and receiving information outside of the lubrication system (10).

11. Lubrication system (10) according to any one of the three preceding claims, **characterised in that** said communication means (15) make it possible for wireless communication.

12. Turbine engine (1) comprising a lubrication system (10) according to any one of the preceding claims.

13. Aircraft (2) comprising at least one turbine engine (1) according to the preceding claim.

14. System for maintaining a turbine engine (1) comprising:
- a turbine engine according to claim 12 when it depends on any one of claims 8 to 11;
- a mobile device (50) able to communicate with said communication means (15) to inform an operator located outside an aircraft (2) of the state of said lubrication system (10).

15. Maintenance system for a turbine engine (1) of an aircraft according to the preceding claim, **characterised in that** said communication means (15), coupled to said transmission means (16) make it possible to communicate to the outside of the aircraft (2), information representative of the state of said lubrication system (10) and **in that** said system for maintaining comprises a mobile device (50), able to communicate with said communication means (15) to an operator located on the ground outside the aircraft (2).
